# EUROPÄISCHE PATENTSCHRIFT

(11) **EP 0 882 546 B1**
(45) Veröffentlichungstag und Bekanntmachung des Hinweises auf die Patenterteilung: **03.09.2003**
(21) Anmeldenummer: 98110141.3
(22) Anmeldetag: 04.06.1998
(51) Int. Cl.: B23P 19/00, B23P 19/06, B21J 15/32

(54) **Versorgungssystem zum Zuführen von Verbindungselementen von einer Versorgungseinheit an einen Stanzkopf**
Supply system for feeding fasteners from a supply unit to a punch head
System d' alimentation pour alimenter des éléments de fixation d' une unité d' alimentation vers une tête de poinçonnage

(30) Priorität: 07.06.1997 DE 19724097; 22.07.1997 DE 19731344
(43) Veröffentlichungstag der Anmeldung: 09.12.1998
(73) Patentinhaber: MASCHINENBAU DIETER SCHMIDT, 93055 Regensburg (DE)
(72) Erfinder: Schmidt, Dieter, 93080 Niedergebraching (DE)
(74) Vertreter: Graf, Helmut, Dipl.-Ing.

(56) Entgegenhaltungen:
- EP-A- 0 703 037
- WO-A-95/11770
- DE-A- 3 937 903
- DE-A- 4 310 953
- DE-A- 4 415 973
- DE-U- 29 614 382
- FR-A- 2 560 305
- US-A- 3 275 191
- US-A- 4 694 974
- "GAS-ACTIVATED SEPARATING/RELEASE MECHANISM" IBM TECHNICAL DISCLOSURE BULLETIN, Bd. 33, Nr. 9, 1. Februar 1991, Seiten 279-282, XP000109525

## Beschreibung

Die Erfindung bezieht sich auf ein System oder Versorgungssystem gemäß Oberbegriff Patentanspruch 1 oder 16 ür sogenannte Stanz- oder Nietköpfe, die vorzugsweise zur Verwendung in Arbeitsmaschinen oder -geräten, beispielsweise in Pressen bestimmt sind, wie z.B. aus der US-A- 3 275 191 bekannt.

Insbesondere bei der Herstellung von Werkstücken aus Blech und mit Werkzeugen, die in einer Presse vorgesehen sind, ist es bekannt, Verbindungselemente usw. durch Fügen und beispielsweise anschließendes Verpressen mit dem jeweiligen Werkstück zu verbinden, und zwar unter Verwendung eines sogenannten Stanzkopfes, der in dem verwendeten Werkzeug vorgesehen ist. Diese Verbindungselemente sind z.B. Muttern oder Muttergewindestücke, beispielsweise auch solche mit kreiszylinderförmiger Umfangsfläche, Gewindebolzen usw., also insbesondere Verbindungselemente, die ein späteres Verbinden des Werkstückes mit anderen Elementen ermöglichen.

Bekannt ist auch, Verbindungselemente in Werkstücke einzubringen, um diese hierbei zu verbinden, z.B. durch Nieten oder Stanznieten.

Bekannt ist bei Stanzköpfen weiterhin, die Verbindungselemente als Hauptvorrat in einer Versorgungseinheit, beispielsweise in einem Versorgungswagen bereitzustellen, der seitlich von der Arbeitsmaschine bzw. Presse positioniert und über eine Zuführung mit dem Stanzkopf verbunden ist. Diese Zuführung ist dabei ein flexibler Schlauch mit einem Kanal für die Verbindungselemente.

Bei einem bekannten Versorgungssystem (DE 42 25 282) werden die Verbindungselemente jeweils einzeln durch den Kanal des Schlauches an den Stanzkopf "geschossen", und zwar durch kurzzeitige Beaufschlagung der Zuführung mit einem hohen Luftdruck. Da die Zuführung eine relativ große Länge aufweist, wird für das Nachladen der Verbindungselemente von der Versorgungseinheit an den Stanzkopf eine gewisse Zeit benötigt, die dann die kürzeste Arbeits- oder Taktzeit der Arbeitsmaschine bzw. Presse bestimmt, wodurch die Leistung der Arbeitsmaschine bzw. Presse stark eingeschränkt ist.

Das gleichzeitige Zuführen einer Vielzahl von Verbindungselementen oder aber das vollständige Auffüllen des Kanals der Zuführung mit Verbindungselementen führt bei bekannten Systemen zu einem gegenseitigen Sperren oder Blockieren der Verbindungselemente im Kanal und damit zu Funktionsstörungen, und zwar insbesondere dann, wenn die Verbindungselemente eine gerundete Außenfläche aufweisen. Solche Funktionsstörungen sind insbesondere bei von den Betriebskosten teuren Pressen, wie sie z. B. in der Automobilindustrie zum Herstellen von Karosserieteilen usw. verwendet werden, nicht zulässig, Weiterhin ist bei den bekannten Systemen für das "Einschießen" der Verbindungselemente ein hoher Energieaufwand notwendig.

Bekannt ist ein Versorgungssystem zum Zuführen von Verbindungselementen in Form von Einpreßmuttern (EP 0 703 037 A), wobei dieses bekannte System u. a. auch eine Schleuseneinrichtung besitzt, die unmittelbar am Stanzkopf vorgesehen ist und die demzufolge mit ihrem Ausgang an einer Führung für die Verbindungselemente am Stanzkopf und mit ihrem Eingang über eine flexible Zuführung mit der Versorgungseinheit verbunden ist.

Die Schleuseneinheit besitzt in einem Gehäuse einen kanalartigen Schleusenraum für die Verbindungselemente, der (Schleusenraum) durch zwei Schieber wechselweise zu der flexiblen Zuführung und zu dem Stanzkopf hin geöffnet bzw. gesperrt wird. Das Sperren zu der flexiblen Führung erfolgt allerdings nicht durch Sperren des Kanals für die Verbindungselemente, sondern durch Festklemmen eines Verbindungselementes am Eingang des Schleusenraumes. Eine ordnungsgemäße Funktion des bekannten Systems bzw. der dortigen Schleuse setzt also voraus, daß stets eine ausreichende Anzahl an Verbindungselementen in der flexiblen Zuführung am Eingang der Schleuse ansteht, um beim Öffnen der Schleuse an ihrem Ausgang zu dem Stanz- und Nietkopf ein Sperren dieser Schleuse an ihrem Eingang durch Festklemmen eines Bauelementes zu gewährleisten.

Aufgabe der Erfindung ist es, ein Zuführ- oder Versorgungssystem aufzuzeigen, welches die vorgenannten Nachteile vermeidet. Zur Lösung dieser Aufgabe ist ein Versorgungssystem entsprechend dem Patentanspruch 1 oder 16 ausgebildet.

Eine Besonderheit des erfindungsgemäßen Systems besteht darin, daß im Kanal der Zuführung ständig ein Mediumstrom von der Versorgungseinheit an den Stanz- oder Nietkopf fließt, und zwar vorzugsweise ein permanenter oder im wesentlichen gasförmiger Mediumstrom, nämlich bevorzugt Druckluft, wobei die von diesem Medium herrührende Druckdifferenz zwischen dem Druck im Bereich der Versorgungseinheit und im Bereich des mit dem Stanz- oder Nietkopf verbundenen Endes der Zuführung konstant oder im wesentlichen konstant ist.

Eine weitere Besonderheit besteht darin, daß die Versorgungseinheit eine Beladeeinheit mit Schleusenfunktion aufweist, und zwar derart, daß durch eine Schleuseneinheit, die jeweils nur entweder zu dem Vorrat an Verbindungselementen in der Versorgungseinheit oder zu dem Kanal der Zuführung hin offen ist, dieser Kanal ständig zum Vorrat hin geschlossen ist, so daß ein konstanter oder im wesentlichen konstanter Druckgradient oder -verlauf im Kanal des Zuführelementes erhalten wird.

Durch eine Steuereinrichtung ist die Beladeeinrichtung in der unterschiedlichsten Form steuerbar.

Weiterbildungen der Erfindung sind Gegenstand der Unteransprüche. Die Erfindung wird im Folgenden anhand der Figuren an Ausführungsbeispielen näher erläutert. Es zeigen:

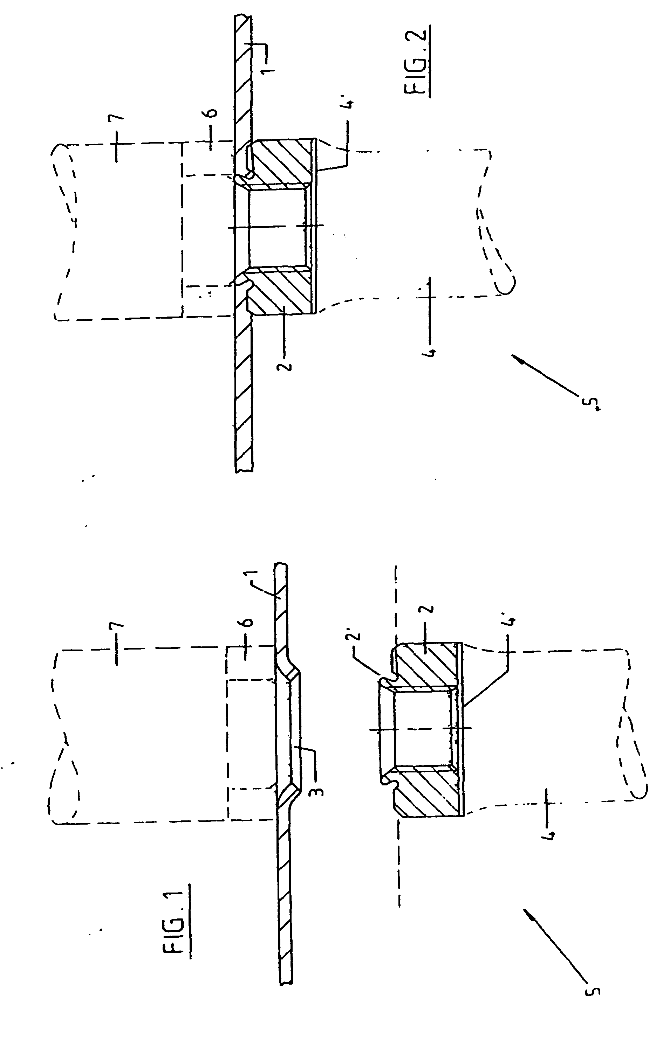

- Fig. 1 und 2: ein Verbindungselement in Form einer Mutter und ein von einem Blech gebildetes Werkstück vor dem Einsetzen dieser Mutter in ein im Werkstück vorbereitetes Loch (Fig. 1) sowie nach dem Einsetzen und Befestigen der Mutter im Werkstück durch Verpressen (Fig. 2);

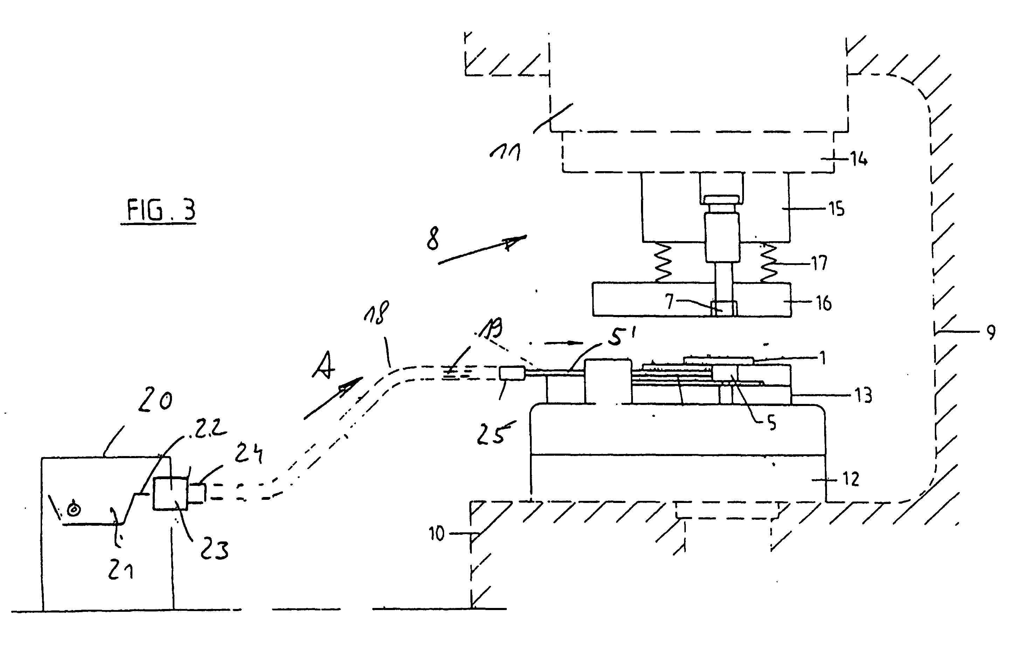

- Fig. 3: in vereinfachter Darstellung und in Seitenansicht eine Presse zusammen mit einem in dieser Presse enthaltenen Stanzkopf sowie eine Versorgungseinheit zum Zuführen der Muttem an dem Stanzkopf;
- Fig. 4: den Stanzkopf sowie die Versorgungseinheit (Versorgungswagen) mit der dortigen Vereinzelung;
- Fig. 5 und 6: in vergrößerten Darstellungen die Vereinzelung für die Muttern in zwei unterschiedlichen Schnittebenen;
- Fig. 7: eine Darstellung ähnlich Figur 4 bei einer weiteren möglichen Ausführungsform;
- Fig. 8: einen Schnitt entsprechend der Linie A - B der Figur 7;
- Fig. 9: in sehr vereinfachter Darstellung und in Seitenansicht eine Zange, vorzugsweise eine Roboterzange zum Stanznieten;
- Fig. 10: in vereinfachter Darstellung die an der Stange vorgesehenen Zuführung zum Vereinzeln der Nieten;
- Fig. 11: in vereinfachter Darstellung eine Verbindung zwischen zwei Bauteilen durch Stanznieten;
- Fig. 12: eine Darstellung wie Fig. 9, jedoch mit einem an der Zange vorgesehen Stanzkopf.

In den Figuren ist 1 ein aus einem Blech durch Stanzen hergestelltes Werkstück, welches der einfacheren Darstellung wegen als flaches Werkstück wiedergegeben ist, aber auch jede andere erforderliche Formgebung aufweisen kann. Mit 2 ist ein Verbindungselement bezeichnet, welches bei der dargestellten Ausführungsform als Mutter ausgeführt ist, die mit einem Bund 2' in einer in das Werkstück 1 durch Stanzen eingebrachten Öffnung 3 durch Einsetzen (Fügen) und durch anschließendes Verpressen unter Verwendung eines Einpreßstößels 4 (Plunger) eines Stanzkopfes 5 und eines Verpreßringes 6 eines Gegenwerkzeuges 7 im Werkstück 1 befestigbar ist. Die Muttern 2 besitzen eine kreiszylinderförmige Umfangs- bzw. Mantelfläche und ein Innengewinde.

Bei der dargestellten Ausführungsform erfolgt die Herstellung des Werkstückes 1 in einer Presse 8, und zwar in einem in dieser Presse vorgesehenen Werkzeug, wekhes beispielsweise ein Folgewerkzeug ist und u.a. auch das Gegenwerkzeug 7 mit dem Preßring 6 aufweist. Weiterhin erfolgt bei der dargestellten Ausführungsform das Einsetzen der jeweiligen Mutter 2 in die zugehörige Öffnung 3 von unten her.

Die Presse 8 besteht im wesentlichen aus einem Pressengestell 9, welches das Unterteil 10 der Presse bildet und an welchem in vertikaler Richtung auf- und abbewegbar der Pressenstößel 11 geführt ist. Am unteren Teil 10 ist eine Aufspannplatte 12 vorgesehen, auf der direkt oder aber über eine Zwischenplatte das untere Werkzeugteil 13 befestigt ist. An der Unterseite des Pressenstößels 11 ist eine Aufspannplatte 14 vorgesehen, an welcher ein oberes Werkzeugteil 15 in Form einer Stempelplatte befestigt ist. Weiterhin weist die Presse 8 einen gefederten Niederhalter 16 auf, der zwischen dem oberen Werkzeugteil 15 und dem unteren Werkzeugteil 13 angeordnet ist und sich bei geschlossener Presse 8 über die Kraft von Niederhalterfedem 17 gegen das Werkstück 1 abstützt. Im Niederhalter ist beispielsweise auch das als Schieber oder Stößel (Plunger) ausgebildete Gegenwerkzeug 7 vorgesehen. Der Stanzkopf 5, der eine komplette, d.h. vollfunktionsfähige, im Werkzeugteil 13 montierte Baueinheit bildet, ist so ausgeführt, daß bei jedem Pressenhub, d.h. bei jedem Bewegungshub des Pressenstößels 11 nach unten die erste, im Stanzkopf 5 bereitstehende Mutter mit dem Einpreßstößel 4 des Stanzkopfes in eine vorbereitete Öffnung 3 eingesetzt und in dieser Öffnung befestigt wird. Die Ausbildung eines solches Stanzkopfes ist dem Fachmann bekannt.

Das Zuführen der Mutter 1 an dem Stanzkopf 1 erfolgt über einen flexiblen Schlauch 18, der einen Kanal 19 mit einem rechteckförmigen Querschnitt bildet, in welchem die Muttem 2 jeweils mit ihrer Zylinderachse senkrecht zur Längserstreckung des Schlauches 18 orientiert und Schlauchlängsrichtung hintereinander dem Stanzkopf 5 zugeführt werden, und zwar von einer als Versorgungswagen 20 ausgebildeten Versorgungseinheit, die mit Abstand von der Presse positioniert ist. Die Versorgungseinheit 20 umfaßt bei der dargestellten Ausführungsform u.a. einen Topf 21, der Bestandteil eines Schwingförderers ist und in dem die Muttern 2 als ungeordnete Menge eingebracht sind. An den Topf 21 schließt sich eine Zuführschiene 22 an, in der die den Topf 21 in der richtigen Orientierung verlassenden Muttern 2 in dieser Orientierung dicht aneinander anschließend einer Beladeeinrichtung 23 zugeführt werden.

Eine Besonderheit dieses die Versorgungseinheit 20 und den Schlauch 18 aufweisenden Zuführsystems besteht darin, daß während des Betriebes ständig unter Druck stehende Luft den Kanal 19 durchströmt, und zwar von der Beladeeinrichtung 23 in Richtung Stanzkopf 5, wie dies in den Figuren mit dem Pfeil A angedeutet ist, und daß der im Schlauch 18 herrschende Druckverlauf, insbesondere auch der Differenzdruck zwischen dem am Versorgungswagen 20 angeschlossenen Schlauchende und dem am Stanzkopf 5 bzw. an einer starren Führung 5' dieses Stanzkopfes 5 angeschlossenen Schlauchende zeitlich konstant oder im wesentlichen konstant ist. Da der Querschnitt des Kanals 19 so ausgeführt ist, daß dieser Querschnitt von den Muttern 2 nicht dicht verschlossen ist, sondern die Förderluft an jeder im Kanal 19 befindlichen Mutter 2 vorbei strömen kann, wird jeder im Kanal 19 befindliche Mutter direkt durch die Förderluft weiterbewegt, d.h. die Muttern 2 "schwimmen" jeweils im Strom der Förderluft mit, so daß es nicht zu einem gegenseitigen Verklemmen der Muttern 2 im Kanal 19 des flexiblen Schlauches 18 kommen kann.

Der Schlauch 18 ist über eine Kupplung 24 mit dem Auslaß der Beladeeinrichtung 23 und mit einer Kupplung 25 mit dem Anfang der starren Führung 5' des Stanzkopfes 5 lösbar verbunden.

Synchron mit und/oder in Abhängigkeit vom Pressenhub ist die Beladeeinrichtung 23 in der nachstehend noch näher beschriebenen Weise derart steuerbar, daß über diese Beladeeinheit jeweils eine gewünschte Menge an Muttem 2 in den Kanal 19 des Schlauches 18 weitergeleitet werden. Durch entsprechende Steuerung der Beladeeinrichtung 23 sind grundsätzlich u.a. folgende Arbeitsweisen für das Zuführsystem möglich:
- In dem mit der Kupplung 25 versehenen Ende des Schlauches 18 befindet sich ein Teil-Vorrat an Muttern 2, während der restliche Teil des Schlauches 18 bzw. des Kanals 19 keine Muttern enthält. Durch die den Teil-Vorrat bildenden Muttern, die eine Muttern-Reihe bilden, welche sich auch in der starren Führung 5' des Stanzkopfes 5 fortsetzt, ist sichergestellt, daß für den Stanzkopf 5 immer eine ausreichende Anzahl an Muttern zur Verfügung steht. Nach jedem Arbeitshub der Presse 8 oder aber nach einer vorgegebenen Anzahl von Arbeitshüben wird dieser Vorrat im Schlauch 18 durch Nachladen einer vorgegebenen Anzahl neuer Muttern 2 ergänzt. Durch die den Schlauch 18 in Richtung des Pfeiles A durchströmende Luftdruck werden die neu zugeführten Muttern 2 jeweils an das Ende des im Schlauch 18 befindlichen Teil-Vorrats herangefördert. Weiterhin werden auch die den Teil-Vorrat bildenden Muttern durch den ständigen Luftstrom nach jedem Pressenhub um die bei diesen Pressenhub verbrauchte Anzahl von Muttern weiterbewegt. Durch die den Schlauch 18 ständig in Richtung des Pfeiles A durchströmende Förderluft sowie durch Vermeidung von Druckschwankungen wird ein Verklemmen der Muttern 2 im Schlauch 18 wirksam verhindert.
- Der Schlauch 18 ist über seine gesamte Länge mit Muttern 2 aufgefüllt. Nach jedem Pressenhub oder nach einer vorgegebenen Anzahl von Pressenhüben wird über die Beladeeinrichtung 23 eine Anzahl an Muttern 2 nachgeladen, die gleich der am Stanzkopf 5 verbrauchten Anzahl ist. Auch hier wird durch die den Schlauch 18 ständig in Richtung des Pfeiles A durchströmende Förderluft sowie durch Vermeidung von Druckschwankungen ein Verklemmen der Muttern 2 im Schlauch 18 wirksam verhindert.
- Eine weitere, bevorzugte Art der Steuerung besteht darin, daß ein gewisser Teil-Vorrat an Muttern 2 lediglich in der starren Führung 5' des Stanzkopfes 5 gebildet und aufrecht erhalten wird, wobei dann nach dem Verbrauch einer bestimmten Anzahl von Muttern 2 im Stanzkopf 5 zwei oder mehr als zwei Muttern 2 als Pulk von der Beladeeinrichtung 23 in den Kanal 19 nachgeladen und als Pulk über den Schlauch 18 an den Stanzkopf 5 gefördert werden.

Unabhängig von dieser spezielleren Art der Steuerung des Zuführsystems ist es, wie bereits ausgeführt, notwendig, jeweils synchron mit der Arbeitsweise der Presse 8 gesteuert eine bestimmte Anzahl von Muttern 2 in den Kanal 19 einzubringen und hierbei insbesondere auch für einen möglichst konstanten Förderluftstrom mit einem zeitlich möglichst konstanten Druck zu sorgen. Hierfür ist die Beladeeinrichtung mit einer Schleusenfunktion oder Schleusentechnik ausgestattet.

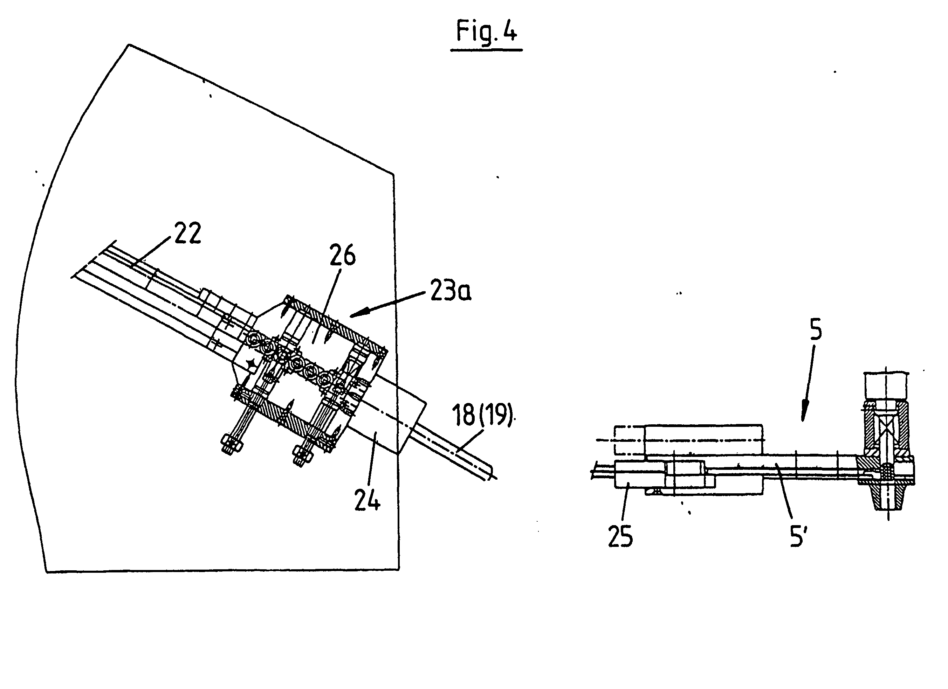

Eine mögliche Ausführungsform einer solchen Beladeeinrichtung ist in den Figuren 4 6 wiedergegeben. Die Beladeeinrichtung ist dort mit 23a bezeichnet. Diese Beladeeinheit besteht im wesentlichen aus einem Gehäuse 26, in welchem ein Kanal 27 für die Muttern 2 ausgebildet ist. Der Kanal 27 besitzt vorzugsweise den gleichen Querschnitt wie der Kanal 19, d.h. bei den verwendeten Muttern 2 ist auch der Querschnitt des Kanals 27 rechteckförmig, so daß die Muttern 2 jeweils mit ihrer Zylinder- oder Mutterachse senkrecht zur Längserstreckung des Kanals 27 und parallel zueinander orientiert in diesem Kanal 27 Platz finden.

Mit dem einen Ende 27' schließt der Kanal 27 an die starre Führung 22 an, deren wirksamer Querschnitt dem Querschnitt des Kanals 27 entspricht. Das andere Ende 27" des Kanals 27 ist über die Kupplung 24 mit dem Kanal 19 des Schlauches 18 verbunden.

Im Gehäuse 26 sind zwei Zylinderbohrungen 28 und 29 vorgesehen, die mit ihren Achsen senkrecht zur Längsachse des Kanals 27 liegen, die Mittelachse des rechteckförmigen Kanals 27 senkrecht schneiden und mit ihren Längsachsen parallel zu den größeren Seiten des rechteckförmigen Querschnittes des Kanals 27 liegen. Die beiden Zylinderbohrungen 28 und 29 sind in der Längsrichtung des Kanals 27 voneinander beabstandet. Dieser Achsabstand X ist dabei gleich einem ganzzahligen Vielfachen des Durchmessers D der Muttern 2 oder geringfügig größer, d.h. X = nD, wobei D der Durchmesser der Muttern 2 und n eine ganze Zahl größer als 1 ist. Bei der in den Figuren 4 - 6 dargestellten Ausführungsform ist der Achsabstand X der vierfache Durchmesser D der Muttern 2. Jede Zylinderbohrung 28 und 29 besitzt einen Durchmesser, der gleich oder in etwa gleich dem Durchmesser D der Muttern 2 ist.

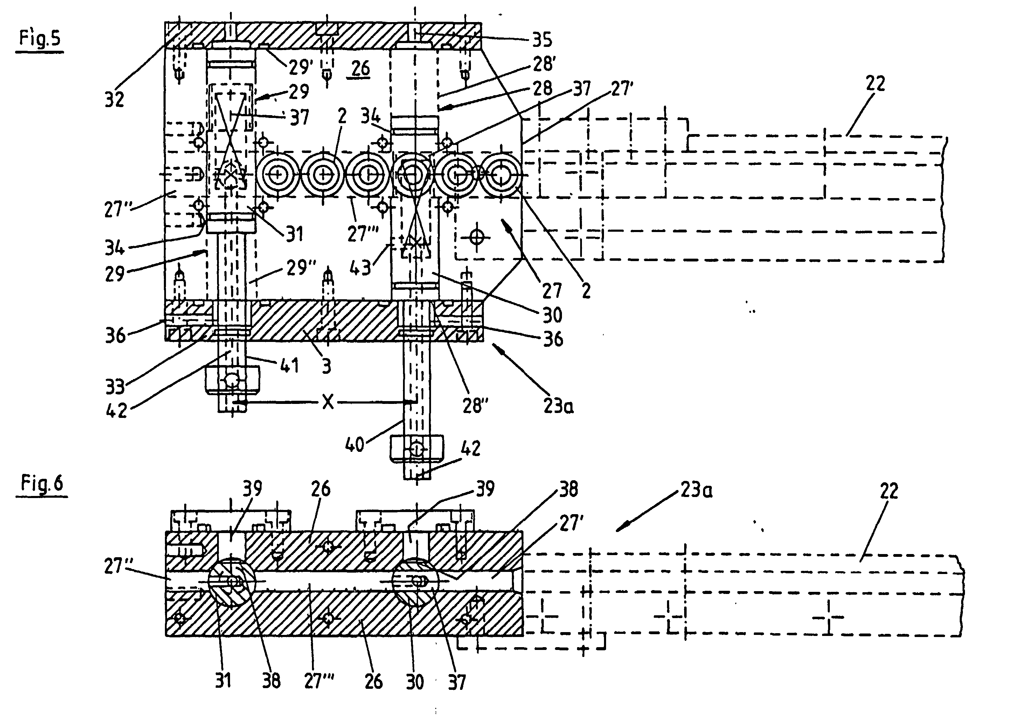

In jeder Zylinderbohrung 28 und 29 ist ein langgestreckter Kolben 30 bzw. 31 in Achsrichtung verschiebbar geführt, und zwar zwischen zwei Endstellungen, in denen der jeweilige Kolben 30 bzw. 31 mit seiner einen Stirn- oder Kolbenfläche gegen einen an dem einen Ende der Zylinderbohrungen 28 und 29 am Gehäuse 26 vorgesehenen und die Bohrungen 28 und 29 dort dicht abschließenden Zylinderdeckel 32 anliegt. In der anderen Endstellung liegt jeder Kolben 30 bzw. 31 mit seiner anderen Kolbenfläche gegen einen die andere Seite der Bohren 28 und 29 dicht abschließenden Zylinderdeckel 33 an. Mit Hilfe von Dichtungs- oder Kolbenringen 34 sind die Kolben 30 und 31 dicht in ihrer Zylinderbohrung 28 geführt, die dann durch den jeweiligen Kolben in zwei Arbeits- oder Zylinderräume unterteilt ist, und zwar in den in der Figur 5 oberen Zylinderraum 28' bzw. 29' sowie in den in dieser Figur jeweils unteren Zylinderraum 28" und 29". Über Druckluftanschlüsse 35 und 36 sind diese Zylinderräume mit einem Druckmedium, d.h. mit Druckluft beaufschlagbar, und zwar gesteuert über eine nicht dargestellten Steuerventilanordnung derart, daß sich die Kolben 30 und 31 in der nachstehend noch näher beschriebenen Weise gegenläufig bewegen.

Jeder Kolben besitzt eine ein Fenster bildende Öffnung 37, die den gleichen Querschnitt wie der Kanal 27 aufweist. In der einen Stellung jedes Kolbens 30 bzw. 31, d.h. in der bei der Darstellung der Figur 5 unteren Stellung (Position "Offen") liegt die Öffnung 37 deckungsgleich mit dem Kanal 27. In der anderen Endstellung (Position "Geschlossen") jedes Kolbens 30 bzw. 31, d.h. bei der für die Figur 5 gewählten Darstellung in der oberen Endstellung ist der Kanal 27 durch den betreffenden Kolben 30 bzw. verschlossen.

Durch den beschriebenen Achsabstand X bildet der Kanal 27 zwischen den beiden Kolben 30 und 31 einen Schleusen-Abschnitt oder -Raum 27"', in welchem eine bestimmte Anzahl an Muttern 2 Platz findet, und zwar n - 1 Muttern 2, wobei n wiederum das ganzzahlige Vielfache ist und dem Quotienten X/D entspricht.

Bei der in den Figuren 4 - 6 beschriebenen Ausführungsform haben in dem Schleusenabschnitt 27"' drei Muttern 2 Platz. Um sicherzustellen, daß in der Position "Offen" die Öffnung 37 jeweils die Fortsetzung des Kanals 27 bildet, d.h. um ein Verdrehen des jeweiligen Kolbens 30 bzw. 31 um die Längsachse zu vermeiden, besitzt jeder Kolben an seiner Außenfläche eine plane Führungsfläche 38, die an einem Führungselement 39 gleitet.

Wie die Figuren 4 und 5 zeigen, ist jeder Kolben 30 und 31 mit einer Kolbenstange 40 bzw. 41 versehen, die achsgleich mit der Längsachse der jeweiligen Zylinderbohrung 28 bzw. 29 liegt und abgedichtet durch den in der Figur 5 unteren Zylinderdeckel 33 herausgeführt ist. Jede Kolbenstange ist mit einem Längskanal 42 versehen, der in einer Austrittsöffnung 43 endet, welche bei der für die Figur 5 gewählten Darstellung unterhalb des jeweiligen Fensters 37 an der dem Ende 27" zugewandten Seite der Kolbenaußenfläche derart vorgesehen ist, daß die jeweilige Austrittsöffnung 43 in der Schleusenstellung "Geschlossen" in dem zu dem Ende 27" führenden Teilabschnitt des Kanals 27 liegt. Die Längsbohrungen 42 sind über Schläuche an eine nicht dargestellte Druckluftquelle angeschlossen.

Die Steuerung der beiden, die Schleusentore oder -Elemente bildenden Schieber oder Kolben 30 und 31 erfolgt derart, daß immer dann, wenn sich ein Kolben 30 bzw. 31 aus der Schleusenstellung "Geschlossen" in die Schleusenstellung "Offen" bewegt, sich der andere Kolben 31 bzw. 30 in der Schleusenstellung "Geschlossen" befindet. Dadurch, daß der Durchmesser der Zylinderbohrungen 28 und 29 und damit auch der Außendurchmesser der Kolben 30 und 31 gleich dem Durchmesser D der Muttern 2 oder etwas größer ist, kann die sich gerade in dem Fenster 37 befindliche Mutter 2 mit dem jeweiligen Kolben 30 bzw. 31 mitbewegt werden.

Wie vorstehend bereits angedeutet erfolgt die Betätigung der Kolben 30 und 31 gegenläufig. Befinden sich im Schleusenraum oder -Abschnitt 27''' keine Muttern 2, so wird bei in der Schleusenposition "Geschlossen" befindlichem Kolben 31 der Kolben 30 in die Position "Offen" bewegt, wodurch insgesamt drei Muttern 2 sich in den Schleusenabschnitt 27" und eine Mutter 2 in das Fenster 37 des Kolbens 30 hineinbewegen. Zum Weiterführen der Muttern 2 an den Schlauch 18 wird der Kolben 30 in die Position "Geschlossen" bewegt und dann der Kolben 31 in die Position "Offen". Durch die aus der Austrittsöffnung 43 des Kolbens 30 austretenden Förderluft werden die Muttern 2 aus dem Schleusenabschnitt 27"' durch das Fenster 37 des Kolbens 31 in den Kanal 19 des Schlauches 18 bewegt. Anschließend wird zum erneuten Füllen des Schleusenabschnittes 27"' der Kolben 31 in die Stellung "Geschlossen" bewegt und der Kolben 30 dann in die Stellung "Offen", in der dann zunächst die im Fenster 37 des Kolbens 30 befindliche Mutter 2 in den Schleusenbereich 27"' hineinbewegt wird und zwei weitere Muttern aus der starren Zuführung 22 folgen, wobei die dritte Mutter aus der starren Führung 22 wieder von der Öffnung 37 des Kolbens 30 aufgenommen wird usw.

Durch die Austrittsöffnung 43 am Kolben 31 wird der Luftstrom im Kanal 19 auch bei in der Stellung "Geschlossen" befindlichem Kolben 31 aufrechterhalten. Der Kolben 13 befindet sich in der Nähe des Endes 27' und der Kolben 31 in der Nähe des Endes 27".

Durch die Schleusenfunktion der beiden Kolben 30 und 31 sowie durch die Luftaustrittsöffnungen 43 ist ein gleichbleibender Druck bzw. Druckverlauf im Schlauch 18 gewährleistet und insbesondere auch ein Druckabfall beim Zuführen neuer Muttern 2 in den Schlauch 18 vermieden.

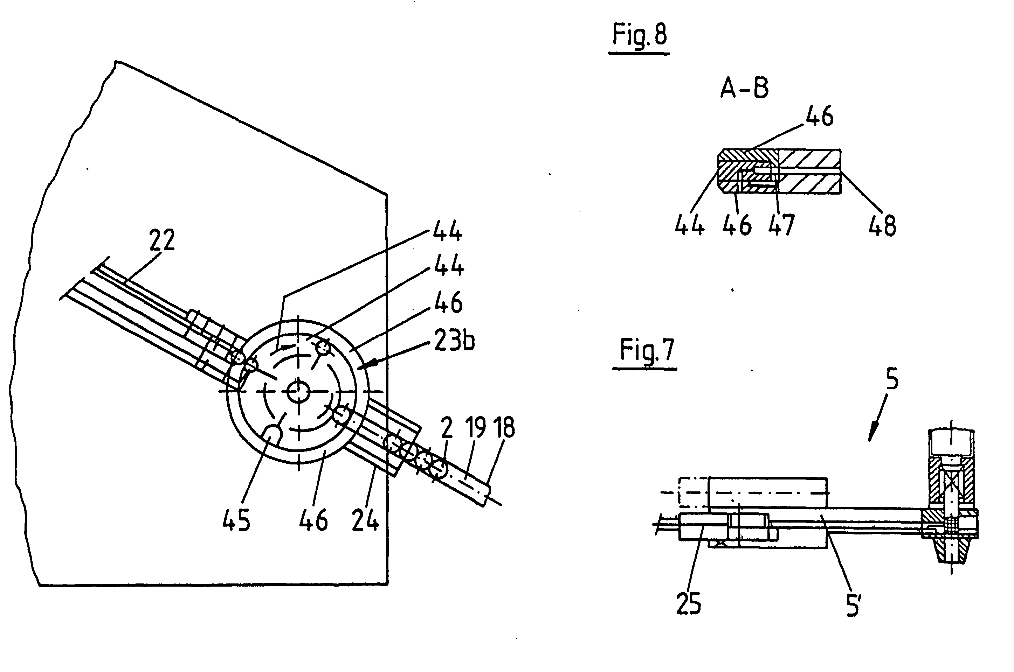

Die Figuren 7 und 8 zeigen als weitere mögliche Ausführungsform eine Beladeeinrichtung 23b, die sich von der Beladeeinrichtung 23a dadurch unterscheidet, daß die Schleusenfunktion von einem Rad 44 erzeugt wird, welches zwischen der starren Führung 22 und der Kupplung 24 bzw. dem Kanal 19 des Schlauches 18 vorgesehen ist und an seinem Umfang mehrere Aufnahmen oder Taschen 45 derart bildet, daß in jeder Tasche jeweils eine Mutter 2 Platz findet. Das Rad 44 ist getaktet derart angetrieben, daß in jeder Ruhestellung eine Tasche 45 sich am Ende der Führung 22 und eine weitere Tasche 45 an dem Auslaß der Beladeeinrichtung 23b bzw. am Anfang des Kanals 19 befindet. Das Rad 44 befindet sich abgedichtet in einem Gehäuse 46 und weist an seinem Umfang einen Luftaustrittsschlitz 47 auf, der ständig mit dem im Gehäuse 46 ausgebildeten und in den Kanal 19 mündenden Kanal 48 für die Mutter 2 in Verbindung steht. Der Schlitz 47 ist an einer Druckluftzuführung angeschlossen, so daß ständig Förderluft von der Beladeeinrichtung 23b in den Schlauch 18 strömt. Die Arbeitsweise der Beladeeinrichtung 23b ist derart, daß in jeder Ruhestellung des beispielsweise durch einen Schrittmotor angetriebenen Rades 44 die an dem Ende der Führung 22 befindliche Aufnahme 45 eine Mutter aufnimmt und diese Mutter dann nach einer bestimmten Anzahl von Bewegungsschritten, d.h. bei der dargestellten Ausführungsform nach zwei Bewegungsschritten, an den Auslaß der Beladeeinrichtung 23b gelangt und durch die Förderluft in den Kanal 19 des Schlauches 18 bewegt wird. Auch diese Ausführungsformen stellt sicher, daß ein ständiger Förderluftstrom im Schlauch 18 vorhanden ist und insbesondere beim Zuführen neuer Muttern 2 in dem Schlauch 18 kein Druckabfall erfolgt.

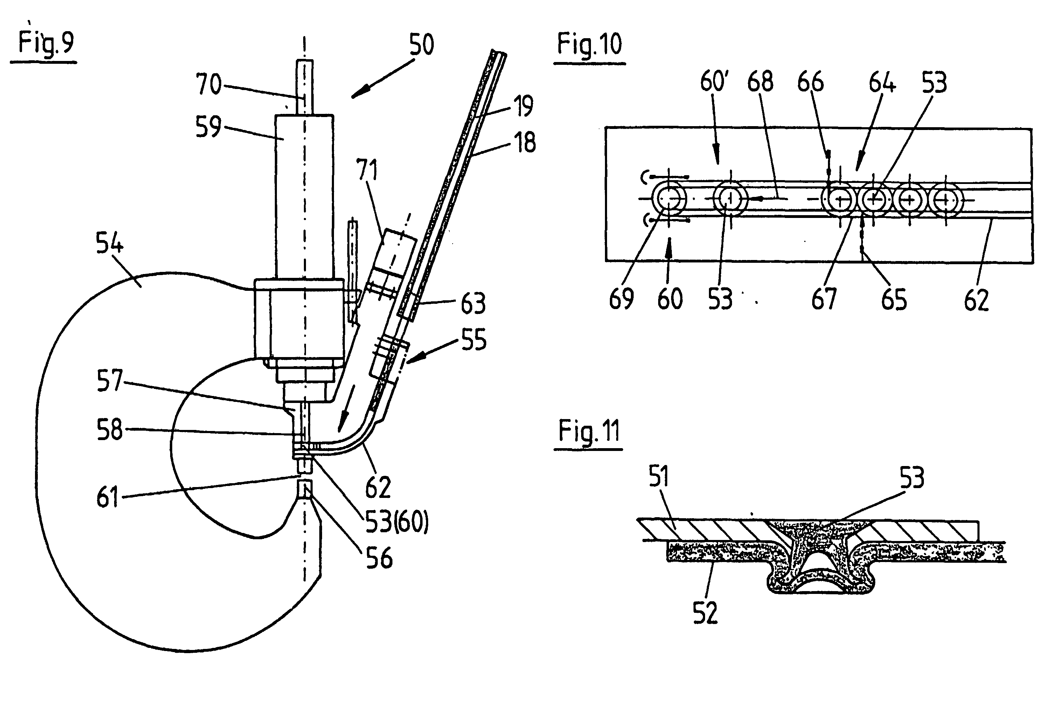

Die Figuren 9 und 10 zeigen eine Zange 50, die beispielsweise eine Roboterzange ist, d.h. an einem Fertigungs-Roboter vorgesehen ist und zum Verbinden zweier Werkstücke, beispielsweise der in der Figur 11 dargestellten Werkstücke 51 und 52 aus Metallblech durch sogenannten Stanznieten dient. Bei diesem, dem Fachmann bekannten Verfahren werden Nieten 53 verwendet, die beim Verbinden der Werkstücke 51 und 52 das eine Werkstück, beispielsweise das Werkstück 51 in Form eines Stanzvorganges durchdringen und im anderen Werkstück 52 durch Verformen sowohl des jeweiligen Nietes 53 als auch des Materials dieses Werkstückes 52 formschlüssig verankert werden, und zwar ohne daß das Werkstück 52 durchdrungen wird. Die Zange 50 besteht hierfür aus einem C-förmigen Rahmen 54. An der offenen Seite des Rahmens ist an einem Ende dieses Rahmens der stanzkopfähnlich ausgebildete Nietkopf 55 und diesem gegenüberliegend am anderen Ende eine Nietmatritze 56 vorgesehen. Der Nietkopf 55 bildet u.a. einen der Nietmatritze 56 gegenüberliegenden Niederhalter 57 und besitzt einen mittig im Niederhalter 57 angeordneten Nietstempel 58 mit Vakuum-Kanal zum Halten jeweils eines Nietes 53 bis zum vollständigen Herstellen der Stanzniet-Verbindung. Der beispielsweise gefedert ausgebildete Niederhalter 57 und der Nietstempel 58 werden durch einen Zylinder, beispielsweise Hydraulikzylinder 59 betätigt.

Vor jedem Nietvorgang wird bei geöffneter Zange 50 ein Niet 53 in eine Niet- oder Bereitstellungsposition 60 gebracht, die sich innerhalb eines Kanales des Nietkopfes 55 für den Nietstempel 58 befindet, und zwar derart, daß der Niet 53 mit seinem Kopf gegen die von dem freien Ende des Nietstempels 58 gebildete Fläche anliegt und dort durch den im Vakuum-Kanal vorhandenen Unterdruck gehalten wird. Zum Nieten werden die Bauelemente 51 und 52 durch Betätigung des Zylinder 59 zwischen dem Niederhalter 57 bzw. dessen Niederhalterfläche 61 und der Nietmatritze 56 eingespannt. Der vom Nietstempel 58 mitbewegte Niet 53 tritt aus dem an der Nierderhalterfläche offenen Kanal aus, durchstanzt dann das Bauteil 51 und wird im Bauteil 52 unter Mitwirkung der Nietmatrize 56 in der in der Figur 11 dargestellen Weise verformt, und zwar bei gleichzeitiger Verformung des Materials des Bauteils 52. Nach jedem Nietvorgang wird nach in die Ausgangsstellung zurückgekehrtem Nietstempel 58 ein neuer Niet 53 an die Bereitstellungsposition 60 bewegt.

Das Zuführen der Nieten 53 erfolgt beispielsweise wiederum von einer Versorgungseinheit, beispielsweise von dem Versorgungswagen 20, der an die Verarbeitung von Nieten 53 angepaßt ist, aber die oben beschriebene Ausbildung aufweist, über einen Schlauch 18 an eine starre Führung 62, die am Nietkopf 55 vorgesehen ist und von einem Anschluß-Bereich 63, an dem der Schlauch 18 anschließbar ist, bis an die Niet- oder Bereitstellungsposition 60 reicht. In der darren Führung 62 weisen die Nieten 53 eine fest vorgegebene Orientierung auf. Weiterhin bilden die Nieten 53 in der Führung 62 eine einspurige Reihe, in der sie dicht aneinander anschließen, und zwar vor einer in der Figur 10 allgemein mit 64 bezeichneten Wechsel-Vereinzelung. Diese Vereinzelung 64 hat Schleusenfunktion, d.h. sie umfaßt im wesentlichen zwei beispielsweise jeweils von einem Schieber gebildeten Schleusenelemente 65 und 66 auf, die den zwischen diesen Schleusenelementen gebildeten Schleusenraum 67 wechselweise zu dem mit dem Schlauch 18 verbundenen Teil der starren Führung 62 oder zu dem die Bereitstellungsposition 60 aufweisenden Teil der Führung hin öffnen. Durch den Förderluftstrom, der sich auch in der starren Führung 62 fortsetzt, wird jeder vereinzelte Niet 53 an eine Zwischenposition 60' vor der Bereitstellungsposition bewegt.

Mit dem Pfeil 68 ist allgemein ein von einem nicht dargestellten Zylinder betätigter Schieber bezeichnet, mit dem der jeweils in der Wechselvereinzelung 64 vereinzelte Niet 63 von der Zwischenposition 60' entlang der Führung 62 an die Bereitstellungsposition 60 bewegt und dort in der für das Nieten erforderlichen exakten Position z.B. durch schwenkbare, federbelastete Zentrierbacken gehalten wird, die bei ordnungsgemäß zugeführtem und positionierten Niet 53 eine bestimmte Stellung aufweisen, welche vor der Einleitung des jeweiligen Nietvorganges von einem Sensor einer Steuereinrichtung der Zange 50 abgefragt wird. Im einfachsten Fall sind die Zentrierbacken schwenkbare oder verschiebbare, gefederte Klingen.

Das Zuführen der Nieten 53 erfolgt also vom Versorgungswagen 20 über den Schlauch 18 mit der diesem Schlauch ständig durchströmenden Druck oder Förderluft in gleicher Weise, wie dies vorstehend für das Zuführen der Muttern 2 an dem Stanzkopf 5 beschrieben wurde, d.h. es sind grundsätzlich u.a. folgende Arbeitsweisen für das Zuführsystem zum Zuführen der Nieten 53 möglich:
- In der Führung 62 vor der Vereinzelung 64 und eventuell auch noch in dem mit Anschlußbereich 63 verbundenen Ende des Schlauches 18 befindet sich ein Teil-Vorrat an Nieten 53, während der restliche Teil des Schlauches 18 keine Nieten 53 enthält. Durch diesen Teil-Vorrat an Nieten 53, die eine Nieten-Reihe bilden, ist sichergestellt, daß der Zange 50 immer eine ausreichende Anzahl an Nieten zur Verfügung steht. Nach jedem Arbeitstakt der Zange 50 oder aber nach einer vorgegebenen Anzahl von Arbeitstakten wird dieser Teil-Vorrat durch Nachladen einer vorgegebenen Anzahl neuer Nieten 53 ergänzt. Durch die den Schlauch 18 in Richtung des Pfeiles A durchströmende Luftdruck werden die neu zugeführten Nieten 53 jeweils an den noch vorhandenen Rest des Teil-Vorrats herangefördert. Durch die auch in der Führung 62 wirkende Förderluft werden die den Teil-Vorrat bildenden Nieten 53 nach jedem Arbeitstakt um die bei diesen Arbeitstakt verbrauchte Anzahl an Nieten weiterbewegt. Durch die den Schlauch 18 ständig in Richtung des Pfeiles A durchströmende Förderluft sowie durch Vermeidung von Druckschwankungen wird ein Verklemmen der Nieten 53 im Schlauch 18 wirksam verhindert.
- Der Schlauch 18 ist über seine gesamte Länge mit Nieten 53 aufgefüllt. Nach jedem Arbeitstakt oder riach einer vorgegebenen Anzahl von Arbeitstakten wird über die Beladeeinrichtung 23 eine Anzahl an Nieten 53 nachgeladen, die gleich der an der Zange 50 verbrauchten Anzahl ist. Auch hier wird durch die den Schlauch 18 ständig in Richtung des Pfeiles A durchströmende Förderluft sowie durch Vermeidung von Druckschwankungen ein Verklemmen der Nieten 53 im Schlauch 18 wirksam verhindert.
- Eine weitere, bevorzugte Art der Steuerung besteht darin, daß ein gewisser Teil-Vorrat an Nieten 53 lediglich in der starren Führung 62 der Zange 50 bzw. des Nietwerkzeuges 55 gebildet und aufrecht erhalten wird, wobei dann nach dem Verbrauch einer bestimmten Anzahl von Nieten 53 in der Zange 50 zwei oder mehr als zwei Nieten 53 als Pulk von der Beladeeinrichtung 23 in den Kanal 19 nachgeladen und als Pulk über den Schlauch 18 an die Zange 50 gefördert werden.

Unabhängig von der speziellen Art der Steuerung ist es u.a. notwendig, daß der Differenzdruck der Förderluft, der auch noch in der starren Führung 62 wirkt, so eingestellt ist, daß der jeweils vereinzelte Niet 53 aus der Zwischenposition 60' nicht durch die Förderluft, sondern erst durch den Schieber 68 in die Bereitstellungsposition 60 gelangt, d.h. die gefederten Zentrierbacken 69 können nicht allein durch die Förderluft, sondern erst durch den Schieber 68 zum Positionieren eines Nietes 53 an der Bereitstellungsposition 60 überdrückt werden.

Grundsätzlich besteht bei der Zange 50 auch die Möglichkeit, auf die Vereinzelung 64 zu verzichten und die Nieten 53 jeweils einzeln von dem Versorgungswagen 20 über den Schlauch 18 einzuschießen, d.h. jeweils ein Niet 53 vor jedem Stanzvorgang. Dieser eingeschossene Niet gelangt dann bis an die Zwischenposition 60'. An die Bereitstellungsposition 60 wird dieser Niet 53 dann wiederum mit dem Schieber 68 bewegt. Auch bei dieser Ausführung ist der Druck des zum Einschießen verwendeten Förderluft-Impulses so gewählt, daß die Zentrierbacken an der Bereitstellungsposition 60 von der Förderluft nicht überdrückt werden.

Am Zylinder 59 befindet sich noch eine Einrichtung 70 zur Prozeß-Überwachung, d.h. zur Weg- und Kraftmessung. Mit 71 ist weiterhin der Anschluß für die Energieversorgung bezeichnet.

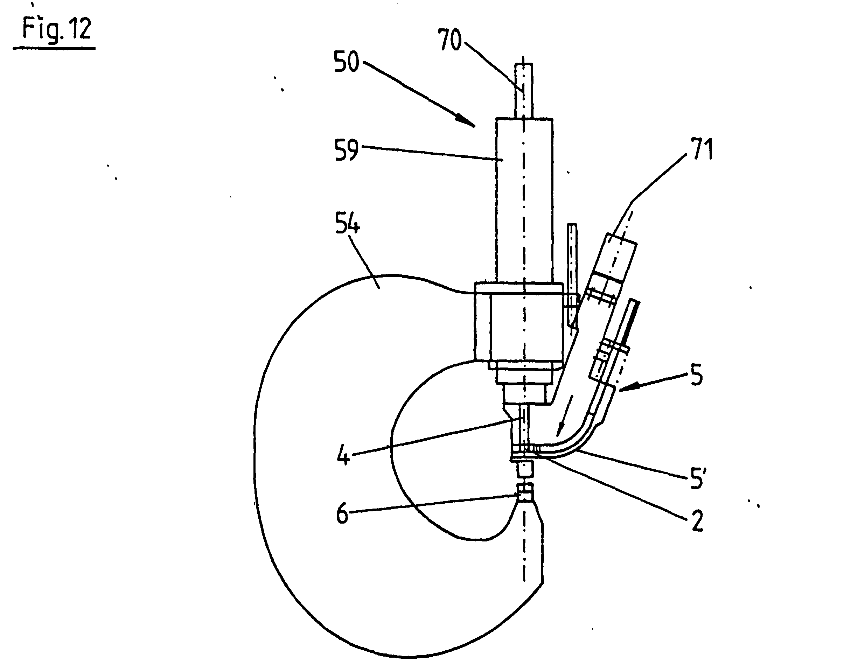

Im Zusammenhang mit den Figuren 9 - 11 wurde die an der Zange 50 vorgesehene Nietkopf 55 beschrieben. Wie die Fig. 12 zeigt, ist es grundsätzlich auch möglich, an der Zange 50 anstelle des Nietkopfes 55 den Stanzkopf 5 vorzusehen, wobei der Einpreßstößel 4 dieses Stanzkopfes 5 dann durch den Zylinder 59 betätigt wird. Anstelle der Nietmatritze 56 ist an der dem Stanzkopf gegenüberliegenden Ende des C-förmigen Rahmens 54 das Gegenwerkzeug 6 vorgesehen.

Die Erfindung wurde voranstehend an Ausführungsbeispielen beschrieben. Es versteht sich, daß zahlreiche Änderungen sowie Abwandlungen möglich sind, ohne daß dadurch der der Erfindung zugrundeliegende Erfindungsgedanke, wie es durch die Ansprüche definiert wird, verlassen wird.

### Bezugszeichenliste

- 1: Werkstück
- 2: Mutter
- 2': Bereich
- 3: Öffnung
- 4: Einspreßstößel
- 5: Stanzkopf
- 5': starre Führung
- 6: Einpreßring
- 7: Gegenwerkzeug
- 8: Presse
- 9: Pressengestell
- 10: Pressenteil
- 11: Pressenstößel
- 12: Aufspannplatte
- 13: Werkzeugteil
- 14: Aufspannplatte
- 15: Stempelplatte
- 16: Niederhalter
- 17: Niederhalterfeder
- 18: Schlauch
- 19: Kanal
- 20: Versorgungswagen
- 21: Topf
- 22: starre Zuführung
- 23, 23a, 23b: Beladeeinrichtung mit Schleusenfunkion
- 24, 25: Kupplungsstück
- 26: - Gehäuse
- 27: Kanal
- 27', 27": Ende
- 27"': Schleusenabschnitt
- 28, 29: Zylinderbohrung
- 30, 31: Kolben
- 32, 33: Zylinderdeckel
- 34: Kolbendichtung
- 35, 36: Druckluftzuführung
- 37: Öffnung oder Fenster
- 38: Führungsfläche
- 39: Führungsstück
- 40, 41: Kolbenstange
- 42: Längsbohrung
- 43: Austrittsöffnung
- 44: Rad
- 45: Tasche
- 46: Gehäuse
- 47: Schlitz
- 48: Kanal
- 50: Zange
- 51, 52: Werkstück
- 53: Niet
- 54: C-Rahmen
- 55: Nietkopf
- 56: Nietmatritze
- 57: Niederhalter
- 58: Nietstempel mit Vakuum-Ansaugung
- 59: Betätigungszylinder (Hydraulikzylinder)
- 60: Arbeits- bzw. Bereitstellungsposition
- 60': Zwischenposition
- 61: Nietkopfteil
- 62: Führung
- 63: Anschlußbereich
- 64: Vereinzelung
- 65, 66: Schleusenelement
- 67: Schleusenraum
- 68: Schieber
- 69: Zentrierbacken
- 70: Prozeßüberwachung
- 71: Energieversorgung

## Patentansprüche

1. System zum Zuführen von Verbindungselementen (2) an einen Stanz- oder Nietkopf (5, 55) zum Einbringen der Verbindungselemente (2, 53) in Werkstücke (1; 51, 52), mit einer Versorgungseinheit (20), die einen Vorrat (20, 21) für die Verbindungselemente (2, 53) bildet,
mit einer flexiblen Zuführung (18) zum Zuführen der Verbindungselemente (2, 53) von der Versorgungseinheit (20) an den Stanz- oder Nietkopf (5, 55),
mit Mitteln zum gesteuerten Nachladen jeweils einer vorgegebenen oder vorgewählten Anzahl von Verbindungselementen (2, 53) an den Stanz- oder Nietkopf (5, 55),
mit einer an der Versorgungseinheit (20) vorgesehenen Beladeeinrichtung (23, 23a) mit einem Schleusenraum (27"), der wechselweise zum Vorrat (21, 22) für die Verbindungselemente (2, 53) sowie zu einem Kanal (19) zum Fördern der Verbindungselemente (2, 53) an den Stanz- oder Nietkopf (5, 55) hin geöffnet werden kann, sowie
mit Mitteln (42, 43), um in dem Kanal (19) einen an den Stanz- oder Nietkopf (5,
55) fließenden Strom eines Strömungsmediums, vorzugsweise einen permanenten oder im wesentlichen permanenten Strom des Strömungsmediums, beispielsweise eines gasförmigen Strömungsmediums zu erzeugen,
wobei der Kanal (19) der Kanal der flexiblen Zuführung (18) ist und in jedem Zustand der Beladeeinheit (23, 23a) der Kanal (19) der flexiblen Zuführung (18) zu dem Vorrat (21, 22) geschlossen ist, **dadurch gekennzeichnet,**
**daß** an dem Schleusenraum (27") wenigstens zwei in Schleusenraumlängsrichtung voneinander beabstandete Schleusenelemente (30, 31) vorgesehen sind, die wechselweise derart steuerbar sind, daß immer dann, wenn ein Schleusenelement den Schleusenraum freigibt dieser von dem anderen Schleusenelement gesperrt ist.

2. System nach Anspruch 1, **dadurch gekennzeichnet, daß** Mittel (42, 43; 47) vorgesehen sind, um im Kanal (19) der Zuführung (18) einen permanenten oder im wesentlichen permanenten von der Versorgungseinheit (20) an den Stanz- oder Nietkopf (5, 55) fließenden Strom des Strömungsmediums zu erzeugen.

3. System nach Anspruch 1 oder 2, **dadurch gekennzeichnet, daß** der Stanz- oder Nietkopf (5, 55) eine starre Führung (62) aufweist, die an eine Bereitstellungsposition (60) führt, an der das jeweilige Verbindungselement für das Einbringen in das Werkstück (, 51 52) bereitsteht, daß an der Führung (62) gefederte Zentriermittel (69) vorgesehen sind, die das jeweilige Verbindungselemente (53) an der Bereitstellungsposition (60) in einer vorgegebenen Lage zentrieren und die beim Bewegen eines Verbindungselementes (53) in die Bereitstellungsposition (60) überdrückt bzw. von dem Verbindungselement (53) federnd zur Seite gedrückt werden, daß an der Führung zum Weiterbewegen der Verbindungselemente in die Bereitstellungsposition (60) eine mechanische, von einem Betätigungselement, beispielsweise von einem Zylinder betätigte Vorschubeinrichtung (68) vorgesehen ist, und daß die Federkraft für die Zentriermittel (69) und/oder der Druck des Strömungsmediums so eingestellt sind, daß durch den Druck des Strömungsmediums jeweils ein Verbindungselement (53) an der Bereitstellungsposition ansteht, in diese aber erst durch das Vorschubelement (68) bewegt wird.

4. System nach Anspruch 3, **dadurch gekennzeichnet, daß** am Nietkopf (55) vor der Bereitstellungsposition (60) eine Vereinzelung (64) für die als Nieten (53) ausgebildeten Verbindungselemente vorgesehen ist.

5. System nach einem der vorhergehenden Ansprüche, **dadurch gekennzeichnet, daß** der Stanzkopf (5) in einer Arbeitsmaschine oder in einem Arbeitsgerät, beispielsweise in einer Presse (8) oder in einer Zange (50), vorzugsweise in einer Roboter-Zange vorgesehen ist.

6. System nach einem der vorhergehenden Ansprüche, **dadurch gekennzeichnet, daß** die Zuführung ein flexibles, schlauchartiges Element ist.

7. System nach einem der vorhergehenden Ansprüche, **gekennzeichnet durch** Mittel zur Erzeugung eines Luft- oder Druckluftstromes von der Versorgungseinheit an den Stanz-oder Nietkopf (5, 55).

8. System nach einem der vorhergehenden Ansprüche, **dadurch gekennzeichnet, daß** die Beladeeinrichtung (23, 23a, 23b) in Abhängigkeit von und/oder synchron mit dem Arbeitshub oder Arbeitstakt der Arbeitsmaschine oder des Arbeitsgerätes, beispielsweise Presse (8) oder Zange (50) gesteuert ist.

9. System nach einem der vorhergehenden Ansprüche, **dadurch gekennzeichnet, daß** die Beladeeinrichtung (23, 23a, 23b) derart gesteuert ist, daß im Kanal (19) des Zuführelementes (18) am Stanz- oder Nietkopf (5, 55) und/oder in einer dortigen Führung (5', 62) ein Teil-Vorrat an, in einer Reihe hintereinander angeordneten Verbindungselementen (2, 53) gebildet ist, und daß ein Nachladen der Verbindungselemente über die Beladeeinrichtung (23, 23a, 23b) jeweils dann erfolgt, wenn die Anzahl der Verbindungselemente (2, 53) in dem Teil-Vorrat einen vorgegebenen Wert unterschreitet.

10. System nach einem der vorhergehenden Ansprüche, **dadurch gekennzeichnet, daß** die Beladeeinrichtung (23, 23a, 23b) derart steuerbar ist, daß jeweils wenigstens zwei Verbindungselemente (2, 53) gemeinsam bzw. unmittelbar hinter einander als Pulk von der Versorgungseinheit (20) an den Stanz- oder Nietkopf (5, 55) oder an das mit diesem Stanz- oder Nietkopf verbundene Ende des Versorgungselementes (18) gefördert werden, oder daß die Beladeeinrichtung (23, 23a, 23b) derart steuerbar ist, daß der Kanal (19) des Zuführelementes (18) jeweils über seine gesamte oder nahezu seine gesamte Länge mit in diesem Kanal (19) aneinander anschließenden Verbindungselementen (2, 53) gefüllt ist.

11. System nach einem der vorhergehenden Ansprüche, **dadurch gekennzeichnet, daß** das Strömungsmedium unter Druck derart zugeführt wird, daß sich ein Differenzdruck zwischen dem der Versorgungseinheit (20) benachbarten Ende und dem dem Stanz- oder Nietkopf (5, 55) benachbarten Ende im Kanal der Zuführung (18) ergibt.

12. System nach einem der vorhergehenden Ansprüche, **dadurch gekennzeichnet, daß** die Schleusenelemente (30, 31) schieberartig ausgebildet sind.

13. System nach einem der vorhergehenden Ansprüche, **dadurch gekennzeichnet, daß** die Schleusenelemente in dem Gehäuse (26) geführte und vorzugsweise durch ein Druckmedium, z.B. Druckluft betätigte Kolben (30, 31) sind.

14. System nach einem der vorhergehenden Ansprüche, **dadurch gekennzeichnet, daß** die Schleusenelemente (30, 31) jeweils eine ein Fenster bildende Öffnung (37) aufweisen.

15. System nach Anspruch 14, **dadurch gekennzeichnet, daß** in der Öffnung (37) wenigstens eines Schleusenelementes wenigstens ein Verbindungselement (2, 53) Platz findet.

16. System zum Zuführen von Verbindungselementen (2) an einen Stanz- oder Nietkopf (5, 55) zum Einbringen der Verbindungselemente (2, 53) in Werkstücke (1; 51, 52),
mit einer Versorgungseinheit (20), die einen Vorrat (20, 21) für die Verbindungselemente (2, 53) bildet,
mit einer flexiblen Zuführung (18) zum Zuführen der Verbindungselemente (2, 53) von der Versorgungseinheit (20) an den Stanz- oder Nietkopf (5, 55),
mit Mitteln zum gesteuerten Nachladen jeweils einer vorgegebenen oder vorgewählten Anzahl von Verbindungselementen (2, 53) an den Stanz- oder Nietkopf (5, 55),
mit einer an der Versorgungseinheit (20) vorgesehenen Beladeeinrichtung (23b) mit einem Schleusenraum (45), der wechselweise zum Vorrat (21, 22) für die Verbindungselemente (2, 53) sowie zu einem Kanal (19) zum Fördern der Verbindungselemente (2, 53) an den Stanz- oder Nietkopf (5, 55) hin geöffnet werden kann, sowie
mit Mitteln (47), um in dem Kanal (19) einen an den Stanz- oder Nietkopf (5, 55) fließenden Strom eines Strömungsmediums, vorzugsweise einen permanenten oder im wesentlichen permanenten Strom des Strömungsmediums, beispielsweise eines gasförmigen Strömungsmediums zu erzeugen,
wobei der Kanal (19) der Kanal der flexiblen Zuführung (18) ist und in jedem Zustand der Beladeeinheit (23b) der Kanal (19) der flexiblen Zuführung (18) zu dem Vorrat (21, 22) geschlossen ist,
und wobei die Beladeeinrichtung (23b) ein bewegliches Schleusenelement (44) aufweist, welches wenigstens eine den Schleusenraum bildende Aufnahme (45) zur Aufnahme wenigstens eines Verbindungselementes (2, 53) bildet, die zumindest zwischen einer ersten, zum Vorrat (21, 22) hin offenen und zum Kanal (19) der Zuführung (18) hin geschlossenen Position und einer zweiten, zum Kanal (19) des
Zuführung (18) hin offenen und zum Vorrat (21, 22) hin geschlossenen Position bewegbar ist, **dadurch gekennzeichnet,**
**daß** das Schleusenelement (44) ein drehbares Element ist.

## Claims

1. System for feeding joining elements (2) on a punching head or rivet head (5, 55) for inserting the joining elements (2, 53) in work pieces (1; 51, 52), with a supply unit (20) that forms a reserve supply (20, 21) for the joining elements (2, 53),
with a flexible feed conduit (18) for supplying the joining elements (2, 53) from the supply unit (20) to the punching head or rivet head (5, 55),
with means for the controlled re-loading of, respectively, a given or pre-selected number of joining elements (2, 53) to the punching head or rivet head (5, 55),
with a loading device (23, 23a) provided on the supply unit (20), with a lock chamber (27") which can be opened alternately towards the reserve supply (21, 22) for the joining elements (2, 53) as well as towards a channel (19) for conveying the joining elements (2, 53) to the punching head or rivet head (5, 55), as well as
with means (42, 43) for creating in the channel (19) a flow of a flow medium, preferably a permanent or essentially permanent flow of the flow medium, for example a gaseous flow medium, flowing to the punching head or rivet head (5, 55),
wherein the channel (19) is the channel of the flexible feed conduit (18), and in every state of the loading unit (23, 23a) the channel (19) of the flexible feed conduit (18) to the reserve supply (21, 22) is closed,
**characterised in that**
provided on the lock chamber (27") are at least two lock elements (30, 31) which are spaced apart from one another in the longitudinal direction of the lock chamber, and which can be controlled alternately such that whenever a lock element releases the lock chamber, this [latter] is blocked by the other lock element.

2. System in accordance with claim 1, **characterised in that** means (42, 43; 47) are provided for creating, in the channel (19) of the feed conduit (18) a permanent or essentially permanent flow of the flow medium from the supply unit (20) to the punching head or rivet head (5, 55).

3. System in accordance with claim 1 or 2, **characterised in that** the punching or rivet head (5, 55) has a rigid guide (62) that leads to a loading position (60), at which the respective joining element stands ready for insertion into the work piece (51, 52); that provided on the guide (62) are sprung means for centering (69), which centre the respective joining element (53) on the loading position (60) in a predetermined position, and which, when a joining element (53) is moved into the loading position (60), are pressurised or are pressed to the side in a sprung manner by the joining element (53); that provided on the guide, for moving the joining elements on into the loading position (60), there is a mechanical forward feed device (68) operated by an actuating element, for example a cylinder; and that the spring force for the means for centering (69) and/or the pressure of the flow medium are set such that through the pressure of the flow medium, in each case one joining element (53) waits by the loading position, but is only moved into this position by the forward feed element (68).

4. System in accordance with claim 3, **characterised in that** provided on the rivet head (55), before the loading position (60), is an isolator (64) for the joining elements (53) that are designed as rivets.

5. System in accordance with one of the preceding claims, **characterised in that** the punching head (5) is provided in a machine tool or machine, for example in a press (8) or in pincers (50), preferably in robot pincers.

6. System in accordance with one of the preceding claims, **characterised in that** the feed conduit is a flexible, hose-like element.

7. System in accordance with one of the preceding claims, **characterised by** means for creating a flow of air or compressed air from the supply unit to the punching head or rivet head (5, 55).

8. System in accordance with one of the preceding claims, **characterised in that** the loading device (23, 23a, 23b) is controlled in dependence on and/or synchronously with the working stroke or working cycle of the machine tool or machine, for example press (8) or pincers (50).

9. System in accordance with one of the preceding claims, **characterised in that** the loading device (23, 23a, 23b) is controlled in such a way that formed in the channel (19) of the feed element (18), on the punching head or rivet head (5, 55), and/or in a guide (5', 62) there, is a part reserve supply of joining elements (2, 53) arranged in a row one behind another, and that re-loading of the joining elements via the loading device (23, 23a, 23b) then takes place respectively when the number of joining elements (2, 53) in the part reserve supply falls below a predetermined value.

10. System in accordance with one of the preceding claims, **characterised in that** the loading device (23, 23a, 23b) can be controlled in such a way that in each case at least two joining elements (2, 53) are transported jointly or immediately behind one another as a pile from the supply unit (20) to the punching head or rivet head (5, 55), or to that end of the feed element (18) that is connected to this punching head or rivet head; or that the loading device (23, 23a, 23b) can be controlled in such a way that the channel (19) of the feed element (18) is respectively filled over its entire length, or almost its entire length, with joining elements (2, 53) that follow on from one another in the channel (19).

11. System in accordance with one of the preceding claims, **characterised in that** the flow medium is supplied under pressure in such a way that a differential pressure in the channel of the feed conduit (18) results between that end adjacent to the supply unit (20) and that end adjacent to the punching head or rivet head (5, 55).

12. System in accordance with one of the preceding claims, **characterised in that** the lock elements (30, 31) are designed in the manner of sliders.

13. System in accordance with one of the preceding claims, **characterised in that** the lock elements are pistons (30, 31) that are guided in the housing (26) and are preferably actuated via a pressure medium, e.g. compressed air.

14. System in accordance with one of the preceding claims, **characterised in that** the lock elements (30, 31) in each case have an opening (37) that forms a window.

15. System in accordance with claim 14, **characterised in that** there is space for at least one joining element (2, 53) in the opening (37) of at least one lock element.

16. System for feeding joining elements (2) to a punching head or rivet head (5, 55) for inserting the joining elements (2, 53) in work pieces (1; 51, 52),
with a supply unit (20) that forms a reserve supply (20, 21) for the joining elements (2, 53),
with a flexible feed conduit (18) for supplying the joining elements (2, 53) from the supply unit (20) to the punching head or rivet head (5, 55),
with means for the controlled re-loading of, respectively, a given or pre-selected number of joining elements (2, 53) to the punching head or rivet head (5, 55),
with a loading device (23b) provided on the supply unit (20), with a lock chamber (45) which can be opened alternately towards the reserve supply (21, 22) for the joining elements (2, 53) as well as towards a channel (19) for conveying the joining elements (2, 53) to the punching head or rivet head (5, 55), as well as
with means (47) for creating in the channel (19) a flow of a flow medium, preferably a permanent or essentially permanent flow of the flow medium, for example a gaseous flow medium, flowing to the punching head or rivet head (5, 55),
wherein the channel (19) is the channel of the flexible feed conduit (18), and in every state of the loading unit (23b) the channel (19) of the flexible feed conduit (18) to the reserve supply (21, 22) is closed,
and wherein the loading device (23b) has a movable lock element (44), which forms at least one receiver (45) that forms the lock chamber, to receive at least one joining element (2, 53), and which can be moved at least between a first position that is open to the reserve supply (21, 22) and closed to the channel (19) of the feed conduit (18), and a second position that is open to the channel (19) of the feed conduit (18) and closed to the reserve supply (21, 22),
**characterised in that**
the lock element (44) is a rotatable element.

## Revendications

1. Système pour amener des éléments de raccordement (2) jusqu'à une tête d'estampage ou de rivet (5, 55) destinée à insérer les dits éléments de raccordement (2, 53) dans des pièces à usiner (1 ; 51, 52), avec une unité de distribution (20) formant une provision pour les éléments de raccordement (2, 53), avec un mécanisme d'alimentation flexible (18) destiné à amener les éléments de raccordement (2, 53) de l'unité de distribution jusqu'à la tête d'estampage ou de rivet (5, 55), avec des moyens de rechargement contrôlé d'un nombre d'éléments de raccordement (2, 53) prédéterminé ou choisi à l'avance jusqu'à la tête d'estampage ou de rivet (5, 55), avec un dispositif de chargement (23, 23a) prévu contre l'unité de distribution (20), avec un espace d'écluse (27''), pouvant être ouvert alternativement vers la provision (21, 22) pour les éléments de raccordement (2, 53) ainsi que vers un canal (19) destiné à acheminer les éléments de raccordement (2, 53) jusqu'à la tête d'estampage ou de rivet (5, 55), et avec des moyens (42, 43) pour produire dans le canal (19) un écoulement d'un moyen d'écoulement le long de la tête d'estampage ou de rivet (5, 55), et de préférence un écoulement permanent ou essentiellement permanent d'un moyen d'écoulement, comme un moyen d'écoulement en forme de gaz,
le canal (19) étant le canal du mécanisme d'alimentation flexible (18) et ce canal (19) étant, dans chaque situation de l'unité de chargement (23, 23a) fermé en direction de la provision (21, 22), et
**caractérisé en ce que**
au moins deux éléments d'écluse (30, 31) éloignés l'un de l'autre dans la direction longitudinale de l'espace d'écluse ont été prévus contre l'espace d'écluse (27''), ces éléments pouvant être contrôlés alternativement de telle sorte que chaque fois qu'un élément d'écluse libère l'espace d'écluse, celui-ci est barré par l'autre élément d'écluse.

2. Système selon la revendication 1, **caractérisé en ce que** des moyens (42, 43 ; 47) ont été prévus pour produire, dans le canal (19) du dispositif d'alimentation (18) un écoulement permanent ou essentiellement permanent du moyen d'écoulement (20) le long de la tête d'estampage ou de rivet (5, 55).

3. Système selon la revendication 1 ou 2, **caractérisé en ce que** la tête d'estampage ou de rivet (5, 55) présente un guidage rigide (92) menant jusqu'à une position d'approvisionnement (60) à laquelle l'élément de raccordement est disponible pour l'insertion dans la pièce à usiner, **en ce que** des moyens de centrage (69) élastiques centrant les éléments de raccordement (53) en position d'approvisionnement (60) dans une situation prédéfinie et sont surpressurisés lors du déplacement d'un élément de raccordement (53) jusque dans la position d'approvisionnement (60) ou sont pressés de manière élastique par l'élément de raccordement (53), vers le côté, **en ce que** un dispositif de chasse avant (68) mécanique et actionné par un élément de manipulation comme par exemple un cylindre a été prévu contre le guidage destiné à déplacer les éléments de raccordement jusque dans la position d'approvisionnement (60) et **en ce que** la force élastique destinée aux moyens de centrage (69) et / ou la pression du moyen d'écoulement a/ont été réglé(s) de telle sorte qu'un élément de raccordement (53) repose suite à la pression du moyen d'écoulement contre la position d'alimentation mais ne soit déplacé jusque dans cette position que via l'élément d'avancement (68).

4. Système selon la revendication 3, **caractérisé en ce qu'**une dissociation (64) pour les éléments de raccordement conçus comme rivets (53) a été prévue contre la tête de rivet (55), devant la position d'alimentation (60).

5. Système selon une des revendications précédentes, **caractérisé en ce que** la tête d'estampage (5) a été prévue dans une machine de travail ou un appareil de travail comme une presse (8) ou une pince (50), et de préférence dans une pince-robot.

6. Système selon une des revendications précédentes, **caractérisé en ce que** le moyen d'alimentation est un élément flexible, tubulaire.

7. Système selon une des revendications précédentes, **caractérisé par** des moyens pour produire un flux d'air ou d'air comprimé de l'unité d'alimentation jusqu'à la tête d'estampage ou de rivet (5, 55).

8. Système selon une des revendications précédentes, **caractérisé en ce que** le dispositif de chargement (23, 23a, 23b) a été commandé en fonction de et / ou de façon synchronisée avec la course motrice ou la cadence de travail de la machine ou de l'appareil de travail, une presse (8) ou une pince (50) par exemple.

9. Système selon une des revendications précédentes, **caractérisé en ce que** le dispositif de chargement (23, 23a, 23b) a été commandé de telle sorte que dans le canal (19) de l'élément d'alimentation (18) situé contre la tête d'estampage ou de rivet (5, 55) et /ou dans un guidage local (5', 62), une provision partielle ait été formée contre des éléments de raccordement (2, 53) disposés les uns derrière les autres, et de telle sorte qu'un rechargement des éléments de raccordement via le dispositif de chargement (23, 23a, 23b) n'ait lieu que lorsque le nombre d'éléments de raccordement (2, 53) situé dans la provision provisoire est inférieure à une valeur prédéfinie.

10. Système selon une des revendications précédentes, **caractérisé en ce que** le dispositif de chargement (23, 23a, 23b) peut être commandé de telle sorte qu'au moins deux éléments de raccordement (2, 53) soient transportés ensemble ou directement l'un derrière l'autre en peloton de l'unité d'alimentation (20) jusqu'à la tête d'estampage ou de rivet (5, 55) ou jusqu'à l'extrémité de l'élément de distribution (18) raccordée avec cette tête d'estampage ou de rivet, ou de telle sorte que le dispositif de chargement (23, 23a, 23b) puisse être commandé de telle sorte que le canal de l'élément d'alimentation (18) soit rempli sur toute sa longueur ou presque avec des éléments de raccordement (2, 53) attenant les uns aux autres dans ce canal (19).

11. Système selon une des revendications précédentes, **caractérisé en ce que** le moyen d'écoulement est amené sous pression de telle sorte qu'une pression différentielle soit produite entre l'extrémité voisine de l'unité d'approvisionnement (20) et l'extrémité du canal du mécanisme d'alimentation (18) voisine de la tête d'estampage ou de rivet (5, 55).

12. Système selon une des revendications précédentes, **caractérisé en ce que** les éléments d'écluse (30, 31) ont été conçus sous la forme de vannes.

13. Système selon une des revendications précédentes, **caractérisé en ce que** les éléments d'écluse sont des pistons (30, 31) guidés dans le boîtier (26) et de actionnés de préférence par un moyen de pression, comme de l'air comprimé.

14. Système selon une des revendications précédentes, **caractérisé en ce que** les éléments d'écluse (30, 31) présentent chacun une ouverture (37) formant une fenêtre.

15. Système selon la revendication 16, **caractérisé en ce qu'**au moins un élément de raccordement (2, 53) trouve place dans l'ouverture (37) d'au moins un élément d'écluse.

16. Système pour amener des éléments de raccordement (2) jusqu'à une tête d'estampage ou de rivet (5, 55) destinée à insérer les éléments de raccordement (2, 53) dans des pièces à usiner (1 ; 51, 52), avec une unité de distribution (20) formant une provision (20, 21) pour les éléments de raccordement (2, 53), avec un mécanisme d'alimentation flexible (18) destiné à amener les éléments de raccordement (2, 53) de l'unité de distribution (20) jusqu'à la tête d'estampage ou de rivet (5, 55), avec des moyens de rechargement contrôlé d'un nombre d'éléments de raccordement (2, 53) prédéterminé ou choisi à l'avance jusqu'à la tête d'estampage ou de rivet (5, 55), avec un dispositif de chargement (23b) prévu contre l'unité de distribution (20) avec un espace d'écluse (45) pouvant être ouvert alternativement vers la provision (21, 22) pour les éléments de raccordement (2, 53) et vers un canal (19) destiné à transporter les éléments de raccordement (2, 53) jusqu'à la tête d'estampage ou de rivet (5, 55), ainsi qu'avec des moyens (47) destinés à produire dans le canal (19) l'écoulement d'un moyen d'écoulement le long de la tête d'estampage ou de rivet (5, 55), et de préférence un écoulement permanent ou essentiellement permanent du moyen d'écoulement, comme un moyen d'écoulement en forme de gaz par exemple, le canal (19) étant le canal du moyen d'alimentation flexible (18) et le canal (19) du moyen d'alimentation flexible (18) vers la provision (21, 22) étant fermé dans chaque situation de l'unité de chargement (23b), et le dispositif de chargement (23b) présentant un élément d'écluse (44) mobile formant au moins une réception (45) constituant l'espace d'écluse, destinée à recevoir au moins un élément de raccordement (2, 53) et pouvant être déplacée au moins entre, d'une part, une première position ouverte vers la provision (21, 22) et fermée vers le canal (19) du mécanisme d'alimentation (18) et d'autre part, une deuxième position ouverte vers le canal (19) du mécanisme d'alimentation (18) et fermée vers la provision (21, 22), et **caractérisé en ce que** l'élément d'écluse (44) est un élément capable de pivoter.
